# EUROPEAN PATENT APPLICATION

(11) **EP 3 016 297 A1**
(43) Date of publication of application: **04.05.2016**
(21) Application number: 14306745.2
(22) Date of filing: 30.10.2014
(51) Int. Cl.: H04B 7/02, H04W 76/02, H04W 36/00, H04W 12/08

(54) **Methods for controlling access of a client network node to a radio communication system, network sub-system, client network node and computer program thereof**

(71) Applicant: ALCATEL LUCENT, 92100 Boulogne-Billancourt (FR)
(72) Inventor: Braun, Volker, 70435 Stuttgart (DE); Doetsch, Uwe, 70435 Stuttgart (DE); Halbauer, Hardy, 70435 Stuttgart (DE)
(74) Representative: Hofmann, Dirk

(57) **Abstract**

The embodiments of the invention relate to a network-based method for controlling access of a client network node (MS) to a radio communication system. The network-based method contains determining information (MS-ID-MMW, RAP1, RAW-INFO) for setting up a second radio link between the client network node (MS) and the radio communication system when the radio communication system has access to the client network node (MS) via a first radio link (IMT-RL). The network-based method further contains transmitting to the client network node (MS) via the first radio link (IMT-RL) the information (MS-ID-MMW, RAP1, RAW-INFO) for setting up the second radio link between the client network node (MS) and the radio communication system. The embodiments further relate to a client-based method for controlling access of the client network node (MS) to the radio communication system. The client-based method contains receiving via the first radio link (RL1) the information (MS-ID-MMW, RAP1, RAW-INFO) for setting up the second radio link between the client network node (MS) and the radio communication system. The client-based method further contains configuring and operating a transceiver of the client network node (MS) for accessing the radio communication system via the second radio link based on the received information (MS-ID-MMW, RAP1, RAW-INFO). The embodiments even further relate to a network sub-system, to the client network node (MS) and to a computer program for controlling access of the client network node (MS) to the radio communication system.

## Description

### FIELD OF THE INVENTION

The present invention relates to multiple connectivity between a mobile station and a radio communication system via two or more than two radio links and, more particularly but not exclusively, to dual connectivity provided by a first radio link based on radio access technologies which comply with the International Mobile Telecommunications-2000 (IMT-2000) specifications by the International Telecommunication Union and further provided by a second radio link based on millimetre wave frequencies.

### BACKGROUND

This section introduces aspects that may be helpful in facilitating a better understanding of the invention. Accordingly, the statements of this section are to be read in this light and are not to be understood as admission about what is in the prior art.

5G wireless/mobile access (5G = Fifth Generation) is expected to use MMW frequencies (MMW = Millimeter Wave) to enable multi-Giga bit per second data rates. Therefore, MMW air interfaces may be integrated with a so-called legacy IMT radio communication system (IMT = International Mobile Telecommunications). The legacy IMT radio communication system may be based for example on a future evolution of current LTE networks (LTE = Long Term Evolution) and may provide an area-wide or nation-wide wireless coverage. The MMW air interfaces instead may be primarily applied for patchy wireless coverage at MMW frequencies by using so-called hotspot deployments which means that only specific geographical areas may be covered not only by the legacy IMT radio communication system but also by an MMW radio communication system.

A simple implementation may apply separate MMW base stations which contain either a single MMW transceiver for a single MMW radio cell or which contain several MMW transceivers for providing wireless coverage in several MMW radio cells. MMW base stations may apply a conventional paging mechanism, when data shall be transmitted to a mobile station which exchange data via an MMW radio link. If the exact location of the mobile station is unknown, a radio communication network containing the MMW base stations may send out paging indications in a certain geographical area. Nevertheless, such a paging procedure typically implies paging messages to be send out over a larger number of MMW radio cells, because due to a high attenuation by gases in the atmosphere a coverage area of an MMW radio cell is much smaller than a coverage area of a LTE radio cell. A further issue with paging messages on MMW links is that beamforming gains are limited, which may lead to rather high radio resource consumption in the MMW radio cells when paging is applied. Furthermore, if the MMW base stations are permanently active and the mobile station MS is permanently scanning to detect possible MMW radio cells both the mobile station and the radio communication system consume a lot of additional electrical energy for operating MMW base stations and MMW transceivers.

### SUMMARY

An object of the embodiments of the invention is how to establish an MMW link between a mobile radio network and a mobile station which contains a conventional IMT air interface and which further contains an MWW air interface and especially how to perform an initial access on the MMW link by such a mobile station.

The object is achieved by a network-based method for controlling access of a client network node to a radio communication system. The network-based method contains the step of determining information for setting up a second radio link between the client network node and the radio communication system when the radio communication system has access to the client network node via a first radio link. The network-based method further contains the step of transmitting to the client network node via the first radio link the information for setting up the second radio link between the client network node and the radio communication system. The information for setting up the second radio link may contain for example an identifier of the client network node for addressing the client network node on the second radio link. Preferably, the information for setting up the second radio link may further contain information about at least one carrier frequency to be used for setting up the second radio link and/or at least one cell identifier of at least one radio cell which is configured to support the second radio link, and/or at least one system parameter of the at least one radio cell which is configured to support the second predefined wavelength range. The at least one system parameter may be for example allocated bandwidth, transmission mode(s) in use including beamforming, spatial multiplexing or spatial diversity MIMO schemes such as e.g. standardized by 3GPP, or "massive MIMO" schemes as discussed for 5G systems, available modulation and coding schemes, configurations for random access or control signaling, applied transmit power at supporting base stations for operating the second radio link.

The object is further achieved by a network sub-system for controlling access of a client network node to a radio communication system. The network sub-system contains a processing module which is configured to determine information for setting up a second radio link between the client network node and the radio communication system when the client network node has access to the radio communication system via a first radio link. The network sub-system further contains a transmitter module which is configured to transmit to the client network node via the first radio link the information for setting up the second radio link between the client network node and the radio communication system.

In a first alternative embodiment, a single network node of the radio communication system may contain the network sub-system. In a second alternative embodiment, at least two network nodes of the radio communication system may contain the network sub-system and a first one of the at least two network nodes may contain the processing module and a second one of the at least two network nodes may contain the transmitter module.

The object is even further achieved by a client-based method for controlling access of a client network node to a radio communication system. The client-based method contains the step of receiving via a first radio link information for setting up a second radio link between the client network node and the radio communication system when the client network node has access to the radio communication system via a first radio link. The client-based method further contains the step of configuring and operating based on the received information for setting up the second radio link a transceiver of the client network node for accessing the radio communication system via the second radio link.

The object is even further achieved by a client network node for controlling access of the client network node to a radio communication system. The client network node contains a receiver module which is configured to receive information via a first radio link for setting up a second radio link between the client network node and the radio communication system when the client network node has access to the radio communication system via a first radio link. The client network node further contains a processing module which is adapted to configure or to operate based on the received information for setting up the second radio link a transceiver of the client network node for accessing the radio communication system via the second radio link. The client network node may be for example a mobile station or so-called machine device used for M2M communication (M2M = Machine to Machine). Machine devices (such as sensors or meters) are configured to capture an event (such as temperature, inventory level, etc.) that is relayed through a network (wireless, wired or hybrid) to an application (software program) that translates the captured event into meaningful information.

The object is even further achieved by a computer program having a program code for performing either the steps of the network-based method or the steps of the client-based method, when the computer program is executed on a computer, a processor, or a programmable hardware component. The embodiments provide an advantage that the already existing first radio link is applied for assisting and accelerating the link set up of the second radio link in comparison to an alternative method which may transmit the information for setting up the second radio link via the second radio link itself. Using the alternative method, the second radio link cannot be established immediately with parameters that are determined for example by a radio resource control of a base station. Furthermore, a paging mechanism via the second radio link for locating the client network node is not required because a location of the client network node is already known from a cell identifier of a radio cell which provides the connection to the client network node via the first radio link. Thereby, radio resource consumption for paging via the second predefined wavelength range can be avoided. When the mobile station receives such kind of information for setting up the second radio link a detection of a radio cell or several radio cells which should be used for setting up the second radio link, downlink synchronization to the radio cell or the radio cells and a transmission of the access preamble can be facilitated and accelerated.

In a preferred embodiment, the determining step of the network-based method may determine an access preamble to be applied when said client network node accesses the radio communication system via the second radio link and the information for setting up the second radio link further contains information about the access preamble. In such a case, the network-based method further contains receiving from the client network node the access preamble via the second radio link during an initial access of the client network node to the radio communication system via the second radio link, and verifying, whether the received access preamble and the determined access preamble are identical. The preferred embodiment provides the benefit that the access preamble, which have been exclusively determined for the client network node can be used to indicate an expected presence of the client network node on the second radio link.

In a further preferred embodiment, the transceiver of the client network node is only configured and operated for accessing the radio communication system via the second radio link when the information about the access preamble is received via the first radio link. This further preferred embodiment provides the advantage that the client network node is only allowed to access the second radio link when the information about the access preamble has been received in a previous message via the first radio link. Thereby, unsuccessful access attempts via the second radio link due to collisions when multiple client network nodes are transmitting a same access preamble simultaneously can be avoided.

According to an even further preferred embodiment, the information for setting up the second radio link may even further contain information about a predefined access time range to be used for transmitting the access preamble from the client network node and the client-based method further contains the step of transmitting the access preamble via the second radio link during the predefined access time range. Thereby, the radio communication system is able to schedule any access attempts by client network nodes via the second radio link.

Preferably, the predefined access time range may be an access time range being predefined for contention-free random access. This further improves the control of access of the client network node to the radio communication system via the second radio link because no collisions of the access with random access attempts from other client network nodes may occur and thereby the link setup for the second radio link can be further accelerated.

With respect to a further embodiment, the client-based method further contains transmitting uplink data via the second radio link while maintaining the first radio link as a fallback radio link and the network-based method further contains receiving the uplink data via the second radio link while maintaining the first radio link as the fallback radio link. The further embodiment offers the advantage of being still able to transmit uplink data via the first radio link possibly with a lower data rate than via the second radio link if the second radio link suddenly is disconnected for example because of an obstacle appearing for radio frequency signals being transmitted via the second radio link when for example the client network node moves around.

In one embodiment, the client-based method further contains the steps of detecting a radio cell being capable to provide the second radio link, determining that the second radio link may provide a better quality of service than the first radio link, and transmitting via the first radio link a request to the radio communication system for setting up the second radio link. With respect to this embodiment, the network-based method further contains the step of receiving the request from the client network node via the first radio link for setting up the second radio link. Preferably, the request may contain an identifier for a radio cell to be applied for setting up the second radio link. This provides the possibility that the client network node is able to trigger the setup of the second radio link and may propose for example based on signal quality measurement performed at the client network node also a radio cell which shall be used for setting up the second radio link.

According to a further embodiment, the network-based method further contains the step of transmitting to the client network node information for switching a transceiver module of the client network node which shall be applied for transmitting and/or receiving data via the second radio link between a sleep mode and a ready-to-operate mode and the client-based method further contains the step of receiving the information for switching the transceiver module of the client network node which shall be applied for transmitting and/or receiving data via the second radio link between the sleep mode and the ready-to-operate mode and the further step of switching the transceiver module from the sleep mode into the ready-to-operate mode or from the ready-to-operate mode to the sleep mode based on the received information. This further embodiment provides the advantage of controlling per remote an energy consumption of the client network nodes depending on a condition whether data need to be transmitted via the second radio link.

With respect to even further embodiment, the first radio link may be operated in a first predefined wavelength range and the second radio link may be operated in a second predefined wavelength range having wavelengths smaller than the first predefined wavelength range. Preferably, the first predefined wavelength range contains frequencies smaller than 6 GHz and the second predefined wavelength range contains frequencies larger than 6 GHz. The first predefined wavelength range may be a primary wavelength range of an IMT radio communication system such as UMTS, LTE, LTE-Advanced or 5G being applied without coverage gaps in an overall coverage of the radio communication system and the second predefined wavelength range may be a secondary millimeter wavelength range being applied at patchy coverage areas of the radio communication system for example by providing multi Giga bit per second data rates only at specific locations of the radio communication system. In such a scenario, the second radio link is impacted by a larger attenuation than the first radio link. This means, the first radio link is more robust in terms of transmission errors. This means also that radio cells operated with a frequency band, with a single frequency subcarrier or with several frequency subcarriers of the second predefined wavelength range may have a much smaller coverage area than further radio cells which are operated with a further frequency band, with a further single frequency subcarrier or with further frequency subcarriers of the first predefined wavelength range. Therefore, by signaling the information for setting up the second radio link via the first radio link there is a larger possibility for an error-free transmission and for a faster link set up than signaling the information via the second radio link.

In a further preferred embodiment, the first radio link may provide a first transmission capacity and the second radio link may provide a second transmission capacity which is for example two times or ten times larger than the first transmission capacity and the second radio link is set up when a required data rate for serving the client network node exceeds the first transmission capacity and a radio cell offering the second radio link is available at a current location of the client network node. This embodiment allows to use the second radio link for services in specific areas of the radio communication system which require a transmission data rate which is above a data rate that can be provided for example by a nation-wide coverage based on the first radio link.

In an even further preferred embodiment, the network-based method further contains the step of transmitting via the first radio link to said client network node information about a timing advance to be applied at the client network node for transmitting uplink data via the second radio link. Thereby, the timing advance is transmitted in downlink direction over a radio link which is different to a radio link for which the timing advance will be applied. Alternatively the information for the timing advance may be transmitted via the second radio link.

Further advantageous features of the embodiments of the invention are defined in the dependent claims and are described in the following detailed description.

### BRIEF DESCRIPTION OF THE FIGURES

The embodiments of the invention will become apparent in the following detailed description and will be illustrated by accompanying figures given by way of non-limiting illustrations.
Figure 1 shows schematically a radio communication system which is configured to control access of a mobile station to the radio communication system according to an exemplary embodiment of the invention.
Figure 2 shows schematically a message flow diagram of an overall method for controlling access of a mobile station to a radio communication system via a second radio link according to the exemplary embodiment of the invention.
Figure 3 shows schematically a radio communication system which is configured to control access of a machine device to the radio communication system according to a first exemplary embodiment of the invention.
Figure 4 shows schematically a message flow diagram of an overall method for controlling access of a machine device to a radio communication system via a second radio link according to the first exemplary embodiment of the invention.
Figure 5 shows schematically a radio communication system which is configured to control access of a machine device to the radio communication system according to a second exemplary embodiment of the invention.
Figure 6 shows schematically a message flow diagram of an overall method for controlling access of a machine device to a radio communication system via a second radio link according to the second exemplary embodiment of the invention.
Figure 7 shows schematically a flow diagram of a network based method for controlling access of a client network node to a radio communication system according to an exemplary embodiment of the invention.
Figure 8a and Figure 8b show schematically a flow diagram of a client based method for controlling access of a client network node to a radio communication system according to an exemplary embodiment of the invention.
Figure 9a and Figure 9b show schematically two block diagrams of a network subsystem being configured to control access of a client network node to a radio communication system according to two exemplary embodiments of the invention.
Figure 10a and Figure 10b show schematically two block diagrams of a client network node being configured to control access of the client network node to a radio communication system according to two exemplary embodiments of the invention.

### DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

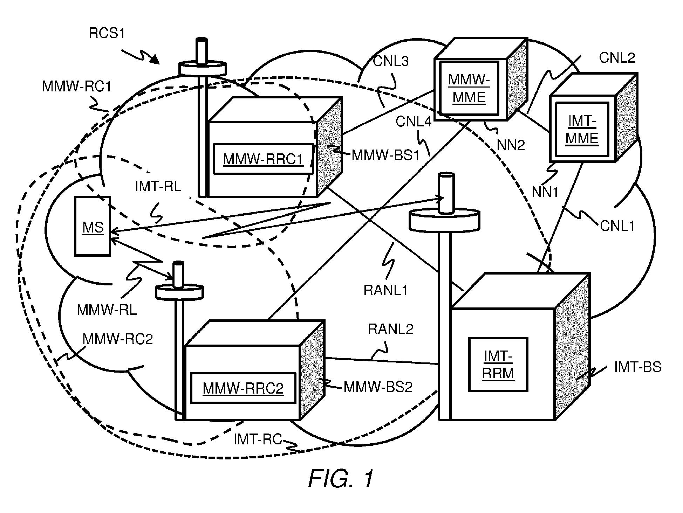

Figure 1 shows schematically a radio communication system RCS1 which is configured to control access of a mobile station MS to the radio communication system RCS1 according to an exemplary embodiment. Further mobile stations are not shown for simplification.

The radio communication system RCS1 may be for example a single mobile radio communication system based on a single primary radio access technology or an interconnected group of several mobile radio communication networks having a same primary radio access technology or having different primary radio access technologies such as GSM/GPRS (GSM = Global System for Mobile Communication, GPRS = General Packet Radio Service), UMTS (UMTS = Universal Mobile Telecommunication Systems), HSPA (HSPA = High Speed Packet Access), LTE, LTE-Advanced, 5G which all have been or will be standardized by 3GPP (3GPP = Third Generation Partnership Program), WLAN (WLAN = Wireless Local Area Network; based on one of the IEEE 802.11 standards), WiMAX (WiMAX = Worldwide Interoperability for Microwave Access); based on one of the IEEE 802.16 standards for enabling a delivery of last mile wireless broadband access as an alternative to cable and DSL (DSL = Digital Subscriber Line)) or alternatively cdmaOne, CDMA2000, or CDMA2000 EV-DO which are standardized by 3GPP2 (3GPP2 = 3rd Generation Partnership Project 2).

The term "mobile station" may be considered synonymous to, and may hereafter be occasionally referred to, as a mobile unit, a mobile user, an access terminal, a UE (UE = user equipment), a subscriber, a user, a cellular telephone, a smart phone, a portable computer, a pocket computer, a hand-held computer, a PDA (PDA = Personal Digital Assistant), a USB stick (USB = Universal Serial Bus), a smart watch, a head mounted display such as a Google glass or a car-mounted mobile device.

The radio communication system RCS1 contains an IMT base station IMT-BS. IMT base station means that such a base station applies a radio access technology which complies with at least one of the International Mobile Telecommunications-2000 (IMT-2000) specifications or the IMT-Advanced specifications which are defined by the International Telecommunication Union for 3G or 4G mobile communication systems.

The IMT base station IMT-BS and further IMT base stations which are not shown for simplification may be installed for providing area-wide or nation-wide wireless coverage by transmitting and receiving first radio frequency signals which are transmitted preferably by a frequency band, by a single frequency subcarrier or by several frequency subcarriers of a first predefined wavelength range.

Following description is given with respect to a multi-carrier radio access technology being applied by the IMT base station IMT-BS and the further IMT base station. All embodiments described in the following may be alternatively and easily applied by a person skilled in the art with respect to a single-carrier radio access technology or with respect to a radio access technology which applies for example a continuous frequency band such as used by UMTS.

The first predefined wavelength range may be consistent with frequency subcarriers having for example a frequency below 6 GHz. Therefore, the IMT base station IMT-BS provides wireless coverage in a radio cell IMT-RC by one of the primary radio access technologies as mentioned above. The IMT base station IMT-BS and the further IMT base stations may be adapted to provide a first transmission capacity such as 100 Mega bit per second and per radio cell which is only an exemplarily value.

The IMT base station IMT-BS contains a radio resource management module IMT-RRM. The radio resource management module IMT-RRM may be responsible for allocation of radio resources for the first radio frequency signals which are transmitted by frequency subcarriers of the first predefined wavelength range. The radio resource management module IMT-RRM may contain a packet scheduler for data packets to be transmitted from the IMT base station IMT-BS and for data packets to be received at the IMT base station IMT-BS.

The radio communication system RCS1 further contains a first network node NN1 which may be preferably part of a core network of the radio communication system RCS1. The first network node NN1 contains a centralized mobility management module IMT-MME. The mobility management module IMT-MME may be applied for providing mobility functions for the mobile station MS and for further mobile stations when they move across the radio communication system RCS1 and are connected to various IMT base stations. The mobility management module IMT-MME may be configured to receive handover measurement reports from the mobile station MS and the further mobile stations, to receive traffic load reports from the IMT base station IMT-BS and the further IMT base stations, to instruct the mobile station MS, the further mobile stations, the IMT base station IMT-BS and the further IMT base stations to execute handover and to adapt transmits path for user data of the mobile station MS and the further mobile stations depended on current serving radio cells of the mobile station MS and the further mobile stations. The first network node NN1 and the IMT base station IMT-BS are interconnected by a network connection CNL1.

According to an alternative embodiment, which is not shown in Figure 1, the IMT base station IMT-BS may contain a distributed mobility management module which means that each IMT base station may have a distributed mobility management module and the distributed mobility management modules may be responsible for those mobile stations which are currently served by the respective IMT base station.

The radio communication system RCS1 even further contains a first supporting base station MMW-BS1, and a second supporting base station MMW-BS2. Further supporting base stations are not shown for simplification. The first supporting base station MMW-BS1 and the second supporting base station MMW-BS2 may be located at regions of an overall coverage area of the radio communication system RCS1 which usually have a considerably higher traffic load than other regions of the overall coverage area of the radio communication system RCS1. Such regions with high traffic load may be for example railway stations, bus stops, airports, market squares, sports halls, etc. The first supporting base station MMW-BS1 and the second supporting base station MMW-BS2 are configured to transmit and to receive second radio frequency signals which are transmitted preferably with a frequency band, with a single frequency subcarrier or with multiple frequency subcarriers of a second predefined wavelength range.

Following description is given with respect to a multi-carrier radio access technology being applied by the first supporting base station MMW-BS1 and the second supporting base station MMW-BS2. All embodiments which are described in the following may be alternatively and easily applied by a person skilled in the art with respect to a single-carrier radio access technology or with respect to a radio access technology which applies for example a continuous frequency band such as used by UMTS.

The second predefined wavelength range may be consistent with frequency subcarriers having for example a frequency above 6 GHz. In a further preferred embodiment, the second predefined wavelength range may be the so-called millimeter wavelength range. The first supporting base station MMW-BS1 provides wireless coverage in a first radio cell MMW-RC1 and the second supporting base station MMW-BS2 provides wireless coverage in a second radio cell MMW-RC2.

The first supporting base station MMW-BS1 and the second supporting base station MMW-BS2 may be adapted to provide a second transmission capacity which is for example two times or ten times larger than the first transmission capacity and may be for example 1 Giga bit per second. Therefore, the first supporting base station MMW-BS1 or the second supporting base station MMW-BS2 may be used when a required data rate for serving the mobile station MS exceeds the first transmission capacity and the first radio cell MMW-RC1 or the second radio cell MMW-RC2 is available at a current location of the mobile station MS.

The first supporting base station MMW-BS1 and the IMT base station IMT-BS may be preferably interconnected by a wireless or a wireline connection RANL1 and the second supporting base station MMW-BS2 and the IMT base station IMT-BS may be preferably interconnected by a further wireless or wireline connection RANL2. The connections RANL1 and RANL2 may provide a functionality for interference management and seamless handover which is similar to the so-called X2 interface between so-called enhanced Node B base stations which have been introduced for the first time by the LTE Release 8 specification.

According an alternative embodiment, instead of the first supporting base station MMW-BS1 and the second supporting base station MMW-BS2 the radio communication system RCS1 may contain a first remote radio head connected to the IMT base station IMT-BS and a second remote radio head connected to the IMT base station IMT-BS or connected to a further IMT base station. In such a case, the connections RANL1, RANL2 may be connections which are based on the so-called CPRI (CPRI = Common Public Radio Interface). The first remote radio head and the second remote radio head may be configured to transmit and receive the second radio frequency signals which have frequency subcarriers as part of the second predefined wavelength range.

The first supporting base station MMW-BS1 contains a radio resource control module MMW-RRC1 and the second supporting base station MMW-BS2 further contains a radio resource control module MMW-RRC2. The radio resource control modules MMW-RRC1, MMW-RRC2 may be adapted to allocate radio resources for the second radio frequency signals which are transmitted by frequency subcarriers of the second predefined wavelength range. Each of the radio resource control modules MMW-RRC1, MMW-RRC2 may contain a packet scheduler for data packets to be transmitted from the supporting base stations MMW-BS1, MMW-BS2 and for data packets to be received at the supporting base stations MMW-BS1, MMW-BS2. The radio resource control modules MMW-RRC1, MMW-RRC2 may be further adapted to configure radio parameters. The radio parameters may be for example cell specific parameters such as used carrier frequencies, available spectral bandwidths etc. The radio parameters may be in addition mobile station specific parameters such as carrier frequency and bandwidth capabilities, data rate capabilities, supported signal formats, time period for CQI transmissions (CQI = Channel Quality Identifier) etc. The radio resource control modules MMW-RRC1, MMW-RRC2 may be further adapted to control admission of mobile stations and release of mobile stations.

In an alternative embodiment, instead of the distributed radio resource control modules MMW-RRC1, MMW-RRC2 a centralized radio resource control module may be applied and functionalities of the radio resource control modules MMW-RRC1, MMW-RRC2 may be combined in the centralized radio resource control module which may be part of one of the IMT base stations or which may be part of a separate network node dedicated for radio resource control.

The radio communication system RCS1 may further contain a second network node NN2 which may be preferably part of the core network of the radio communication system RCS1. The second network node NN2 contains a centralized mobility management module MMW-MME. The mobility management module MMW-MME may be applied for providing mobility functions for the mobile station MS and for further mobile stations when they move across the radio communication system RCS1 and are connected to various supporting base stations such as the first supporting base station MMW-BS1 or the second supporting base station MMW-BS2. The mobility management module MMW-MME may be configured to receive handover measurement reports from the mobile station MS and the further mobile stations, to receive traffic load reports from the supporting base stations MMW-BS1, MMW-BS2, to instruct the mobile station MS, the further mobile stations and the supporting base stations MMW-BS1, MMW-BS2 to execute handovers and to adapt transmit paths for user data of the mobile station MS and the further mobile stations depended on current serving supporting radio cells of the mobile station MS and the further mobile stations. The second network node NN2 and the first supporting base station MMW-BS1 are interconnected by a network connection CNL3 and the second network node NN2 and the second supporting base station MMW-BS2 are interconnected by a network connection CNL4. The first network node NN1 and the second network node NN2 are interconnected by a further network connection CNL2.

The mobile station MS has established a first data connection to the radio communication system RCS1 via a first radio link IMT-RL between the mobile station MS and the IMT base station IMT-BS. When the mobile station MS is in a so-called CONNECTED mode and the mobile station MS moves across the radio communication system RCS1, the first radio link IMT-RL may be switched from one IMT base station to a further IMT base station. This switching of the first radio link IMT-RL may be controlled by the mobility management module IMT-MME.

The first radio link IMT-RL may have been set up permanently, when the mobile station MS has entered the radio communication system RCS1. Alternatively, the first radio link IMT-RL may be only set up, when user data or signaling data needs to be exchanged between the mobile station MS and the radio communication system RCS1.

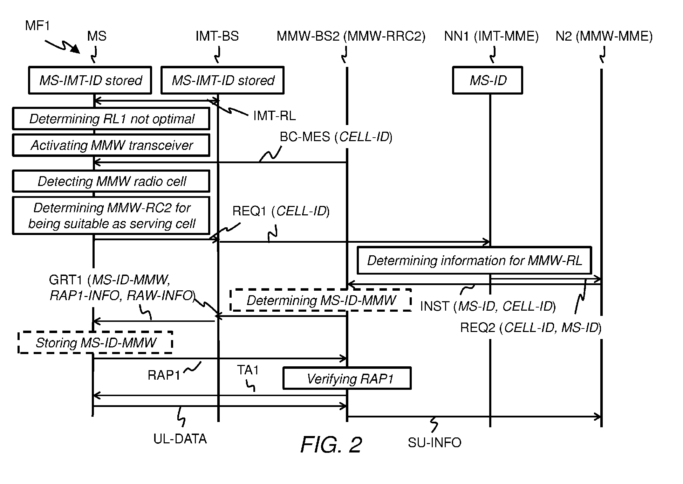

A basic procedure which is executed by the network nodes of the radio communication system RCS1 may be for example as follows: Based on a current location of the mobile station MS, further based on a current traffic load at the IMT base station IMT-BS and even further based on a minimum data rate which is required for a service to be provided to the mobile station MS such as a video download, the first network node NN1 may determine that the first radio link IMT-RL is not suitable for providing the minimum data rate and therefore, the first network node NN1 may decide that the mobile station MS can be served with the minimum data rate via a second radio link MMW-RL that can be set up between the mobile station MS and the second supporting base station MMW-BS2. For being able to set up the second radio link MMW-RL the first network node NN1 determines information for setting up the second radio link MMW-RL between the mobile station MS and the radio communication system RCS1. Then, the first network node NN1 transmits to the mobile station MS via the first radio link IMT-RL the information for setting up the second radio link MMW-RL between the mobile station MS and the radio communication system RCS1. The information for setting up the second radio link MMW-RL contains for example the identifier of the mobile station MS which shall be applied for addressing the mobile station MS on the second radio link MMW-RL. Preferably, the information for setting up the second radio link MMW-RL may further contain information about at least one carrier frequency or at least one frequency range to be used for setting up the second radio link MMW-RL and/or at least one cell identifier of at least one radio cell such as the second radio cell MWW-RC2 which is configured to support the second radio link MMW-RL, and/or at least one system parameter of the at least one radio cell which is configured to provide the second radio link MMW-RL. The at least one system parameter may be for example allocated bandwidth, transmission mode(s) in use including beamforming, spatial multiplexing or spatial diversity MIMO schemes such as e.g. standardized by 3GPP, or "massive MIMO" schemes as discussed for 5G systems, available modulation and coding schemes, configurations for random access or control signaling, applied transmit power at the supporting base stations MMW-BS1, MMW-BS2 for operating the second radio link MMW-RL. When the mobile station MS receives the information for setting up the second radio link MMW-RL, the mobile station MS uses the information for configuring and operating a transceiver of the mobile station MS for accessing the radio communication system RCS1 via the second radio link MMW-RL. More information about the interworking between the network nodes shown in Figure 1 and about the internal processing of the network nodes shown in Figure 1 is given in the following description with respect to the Figure 2 and Figures 7, 8a and 8b.

Figure 2 shows schematically a message flow diagram MF1 of an overall method for controlling access of the mobile station MS to the radio communication system RCS1 via the second radio link MMW-RL preferably while maintaining and not releasing the first radio link IMT-RL between the mobile station MS and the radio communication system RCS1 according to an exemplary embodiment. The initial situation is characterized by an existing first radio link IMT-RL between the mobile station MS and the IMT base station IMT-BS, by an identifier *MS-IMT-ID* such as a C-RNTI (C-RNTI = Cell Radio Network Temporary Identifier) of for example 16 bit length which is valid in a radio cell or a cluster of cells only and which is stored at the mobile station MS and at the IMT base station IMT-BS, by an identifier *MS-ID* of the mobile station MS which may be applied for identifying the mobile station MS in a core network of the radio communication system RCS1 and which is stored at the first network node NN1.

According to a first alternative embodiment which is shown in Figure 2, the mobile station MS may determine that the first radio link IMT-RL will be not be able to provide a required quality of service for a service such as an upcoming video download, e.g. the first transmission capacity via the first radio link IMT-RL will be too small. Therefore, the mobile station MS may activate one of its transceivers which can be configured to operate in the second predefined wavelength range. When the corresponding transceiver of the mobile station MS is activated the mobile station MS may receive from the second supporting base station MMW-BS2 a broadcast message BC-MES which contains an identifier *CELL-ID* of the second radio cell MMW-RC2. Thereby, the mobile station MS is able to detect a presence of the second radio cell MMW-RC2 at a current location of the mobile station MS. The mobile station MS may further receive and measure pilot signals which are transmitted from the second supporting base station MMW-BS2 and which are used to determine a signal quality for second radio cell MMW-RC2. When the signal quality may exceed a predefined signal quality the mobile station MS may determine that the second radio cell MWW-RC2 is suitable for serving the mobile station MS with the required quality of service. Thus, the mobile station MS may transmit via the first radio link IMT-RL a request message REQ1 to the IMT base station IMT-BS which forwards the request message REQ1 to the mobility management module IMT-MME of the first network node NN1. The request message REQ1 preferably contains the identifier *CELL-ID* of the second radio cell MMW-RC2. When the mobility management module IMT-MME receives the request message REQ1, the mobility management module IMT-MME may forward the identifier *CELL-ID* of the second radio cell MMW-RC2 by a further request message REQ2 to the mobility management module MMW-MME of the second network node NN2. The further request message REQ2 may further contain the identifier *MS-ID* of the mobile station MS which is applied in the core network of the radio communication system RCS1 for identifying the mobile station MS.

According to a second alternative embodiment which is not shown in Figure 2 for simplification, the mobile station MS does not execute the steps between the determination that the first radio link IMT-RL will not be able to provide the required quality of service and the transmission of the request message REQ1 but instead the mobility management module IMT-MME may determine that the first radio link IMT-RL will not be able to provide the required quality of service to the mobile station MS. The mobility management module IMT-MME may determine for example based on a knowledge of the current location of the mobile station MS and based on a knowledge that the current location of the mobile station MS is covered by the second radio cell MMW-RC2 that the second radio cell MMW-RC2 shall be applied for serving the mobile station MS. In such a case, the mobility management module IMT-MME transmits to the mobility management module MMW-MME the request message REQ2 which may contain the identifier *CELL-ID* of the second radio cell MMW-RC2 and which may further contain the identifier *MS-ID* of the mobile station MS.

When the mobility management module MMW-MME has received the request message REQ2, the mobility management module MMW-MME may determine based on the identifier *CELL-ID* of the second radio cell MMW-RC2 that the second supporting base station MMW-BS2 is responsible for the second radio cell MMW-RC2 and transmits to the second supporting base station MMW-BS2 an instruction message INST for serving the mobile station MS. The instruction message INST may contain the identified *CELL-ID* of the second radio cell MMW-RC2 if for example the second supporting base station MMW-BS2 provides wireless coverage by two or more than two radio cells and may further contain the identifier *MS-ID* of the mobile station MS.

When the second supporting base station MMW-BS2 has received the instruction message INST, the radio resource control module MMW-RRC2 of the second supporting base station MMW-BS2 may determine an identifier *MS-ID-MMW* which shall be applied for addressing the mobile station MS on the second radio link MMW-RL. Preferably, the radio resource control module MMW-RRC2 may further determine an access preamble *RAP1* which shall be applied by the mobile station MS when accessing the radio communication system RCS via the second radio link MMW-RL a first time. Then, the second supporting base station MMW-BS2 transmits a radio resource grant GRT1 via the IMT base station IMT-BS and via the first radio link IMT-RL to the mobile station MS. The radio resource grant GRT1 contains the identifier *MS-ID-MMW* and may preferably further contain information *RAP1-INFO* about the access preamble RAP1. The information *RAP1-INFO* may be for example an index which has been obtained from a mapping table. The mapping table may contain several mappings between indices and access preambles and may be stored at the supporting base stations MMW-BS1, MMW-BS2 and at the mobile station MS. Alternatively, the identifier and the access preamble RAP1 may be determined by the first network node NN1. In such a case, the mapping table is stored at the first network node NN1 instead of being stored at the supporting base stations MMW-BS1, MMW-BS2 and the request message REQ2 and the instruction message INST contain the identifier and the information *RAP1-INFO* about the access preamble RAP1.

In a further preferred embodiment, the radio resource grant GRT1 may further contain information *RAW-INFO* about a configuration of an access time window which shall be applied by the mobile station MS when accessing the second radio link MWW-RL the first time. The information RAW-INFO may contain for example information about the access time window in time and frequency. When the mobile station MS has received the radio resource grant GRT1, the mobile station MS extracts the identifier *MS-ID-MMW* and the information *RAP1-INFO* about the access preamble RAP1, stores the identifier *MS-ID-MMW,* uses the mapping table to select the access preamble RAP1 based on the information *RAP1-INFO* about and transmits the access preamble RAP1 for example in a contention-based random access time frame to the second supporting base station MMW-BS2. In an alternative embodiment, when the radio resource grant GRT1 contains the information RAW-INFO, the mobile station MS may transmit the access preamble RAP1 during the indicated access time window in a contention-free way. In a further alternative embodiment, periodically appearing access time windows of the second radio link MMW-RL may be grouped into a first group of contention-based time windows for usual random access and into a second group of contention-free time windows for executing access to the second radio link MMW-RL by access preambles which have been indicated previously from the radio communication system RCS1 to the mobile stations as described above for the radio resource grant GRT1. Using the further alternative embodiment, the mobile station MS may transmit the access preamble RAP1 via the second radio link MWW-RL during a contention-free time window.

When the second supporting base station MMW-BS2 has received the access preamble RAP1, the radio resource control module MMW-RRC2 may verify whether the received access preamble RAP1 is identical to the access preamble RAP1 which has been determined and indicated to the mobile station MS previously. Thereby, the mobile station MS is verified as a correct receiver of the radio resource grant GRT1. When both access preambles RAP1 are identical, the second supporting base station MMW-BS2 transmits via the second radio link MMW-RL to the mobile station MS information TA1 about a timing advance to be applied when transmitting uplink data via the second radio link MMW-RL to the second supporting base station MMW-BS2. The second supporting base station MMW-BS2 may further transmit information SU-INFO to the mobility management module MMW-MME of the second network node NN2 that the second radio link MMW-RL for the mobile station MS has been set up.

When the mobile station MS has received the information TA1 about the timing advance, the mobile station MS applies the timing advance to transmit uplink data UL-DATA via the second radio link MWW-RL to the second supporting base station MMW-BS2 preferably while maintaining the first radio link IMT-RL in a CONNECTED state (i.e. the mobile station MS is able to transmit further uplink data simultaneously via the first radio link IMT-RL) or an IDLE state (i.e. the mobile station MS for example may be able to receive downlink data on a broadcast channel or on a paging channel).

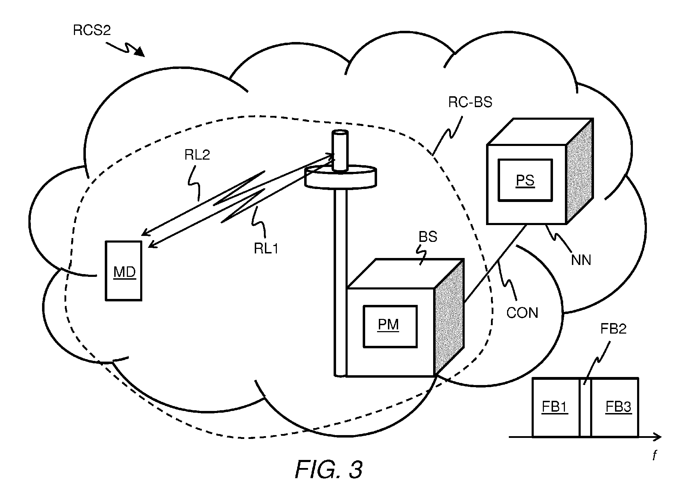

Figure 3 shows schematically a further radio communication system RCS2 which is configured to control access of a machine device MD to the radio communication system RCS2 according to a first exemplary embodiment. The radio communication system RCS2 may apply one of the radio access technologies as mentioned above for the radio communication system RCS1 which is shown in Figure 1.

The term "machine device" may be considered synonymous to, and may hereafter be occasionally referred to, as a sensor, a meter, an actuator, a measurement equipment, etc. which are used for M2M communication. Such machine devices are configured to capture an event (such as temperature, inventory level, etc.) that is relayed through a network (wireless, wired or hybrid) to an application (software program) that translates the captured event into meaningful information.

The radio communication system RCS2 contains a network node NN and a base station BS. The machine device MS is located in a coverage area of a radio cell RC-BS which is provided by radio equipment (e.g. by an antenna system and a transceiver) of the base station BS. Further base stations, further radio cells and other network nodes of the radio communication system RCS2 are not shown for simplification. The network node NN which may be for example part of a core network of the radio communication system RCS2 contains a central paging module PS for a so-called paging system. The paging system may support several popular direct connection protocols, including TAP (TAP = Telelocator Alphanumeric Protocol), TNPP (TNPP = Telocator Network Paging Protocol), SNPP (SNPP = Simple Network Paging Protocol), and WCTP (WCTP = Wireless Communications Transfer Protocol), as well as proprietary modem- and socket-based protocols. The central paging module PS may be configured to receive request messages for example for measurement data which can be provided by machine devices such as the machine device MD. Locations of the machine devices such as corresponding radio cells may be stored at the central paging module PS.

The base station BS contains a paging module PM and is connected for example via a wireline connection CON to the network node NN. The paging module PM is configured to transmit a wake-up message to the machine device MD via a first radio link RL1. The first radio link RL1 may be operated in a frequency band FB2 (see inset in the lower right part of Figure 3).

A basic procedure which is executed by the network nodes of the radio communication system RCS2 may be for example as follows: The first radio link RL1 may have been set up permanently, when the mobile device MD is installed and activated. When an application service requests for example measurement data from the machine device, a request may be received at the central paging module PS. The central paging module PS determines the paging module PM for performing the paging based on the stored location of the machine device MD. The central paging module PS transmits a request to the paging module PM to provide measurement from the machine device MD. The request may contain an identifier of the machine device MD and one or several identifiers for the requested measurement data. When the paging module PM receives the request the paging module PM determines information for setting up a second radio link RL2 between the machine device MD and the radio communication system RCS2. The information for setting up a second radio link RL2 contains for example the identifier of the machine device MD which shall be applied for addressing the machine device MD on the second radio link RL2. Preferably, the information for setting up the second radio link RL2 may further contain information about at least one carrier frequency to be used for setting up the second radio link RL2 and/or at least one cell identifier of at least one radio cell such as the radio cell RC-BS which is configured to support the second radio link RL2, and/or at least one system parameter of the at least one radio cell which is configured to provide the second radio link RL2. As indicated by the inset in the lower right part of Figure 3 the second radio link RL2 may for example apply a frequency band FB1 and a further frequency band FB3 which are separated by the frequency band FB2 for the first radio link RL1. The at least one system parameter may be for example allocated bandwidth, transmission mode(s) in use including beamforming, spatial multiplexing or spatial diversity MIMO schemes such as e.g. standardized by 3GPP, or "massive MIMO" schemes as discussed for 5G systems, available modulation and coding schemes, configurations for random access or control signaling, applied transmit power at base stations for operating the second radio link RL2. The paging module PM transmits to the machine device MD via the first radio link RL1 the information for setting up the second radio link RL2. When the machine device MD receives the information for setting up the second radio link RL2, the machine device MD uses the reception of the information for setting up the second radio link RL2 as a trigger to configure and operate a transceiver of the machine device for accessing the radio communication system RCS2 via the second radio link RL2. The configuration and operation of the transceiver may be done according to the received information for setting up the second radio link RL2.

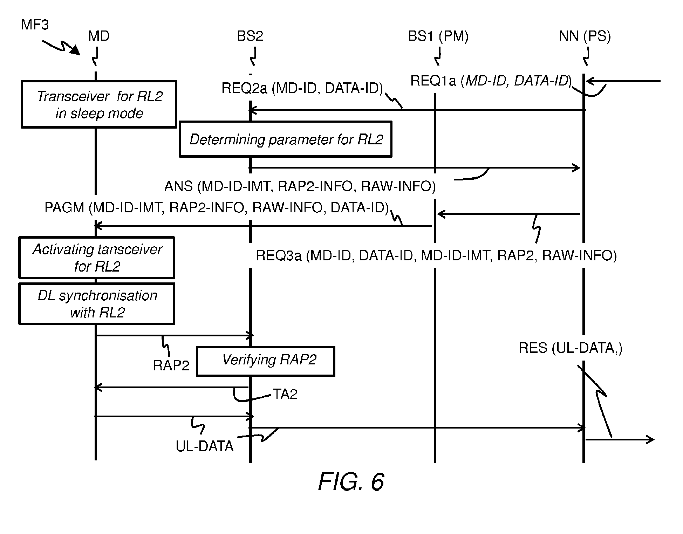

More information about the interworking between the network nodes shown in Figure 3 and about the internal processing of the network nodes shown in Figure 3 is given in the following description with respect to the Figures 6 to 8.

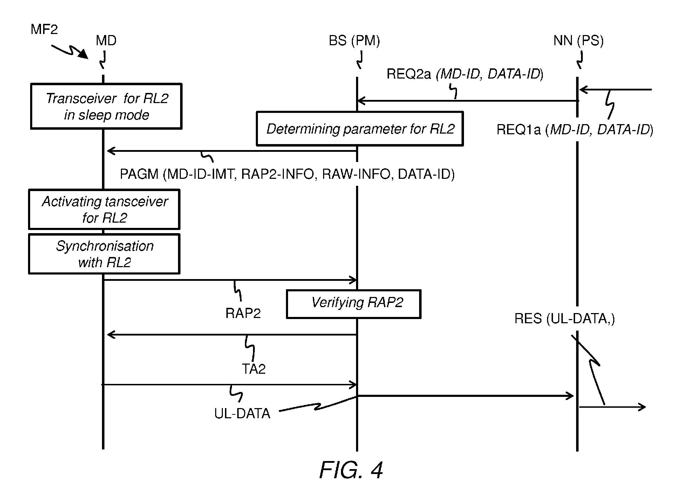

Figure 4 shows schematically a message flow diagram MF2 of an overall method for controlling access of the machine device MD to the radio communication system RCS2, RCS3 via the second radio link RL2 preferably while maintaining the first radio link RL1 between the machine device MD and the radio communication system RCS2, RCS3 according to the first exemplary embodiment. The transceiver of the machine device MD which can be used for the second radio link RL2 is in a sleep mode. A further receiver of the machine MD is in a ready-to-operate mode and is configured to receive paging messages from the paging system.

With respect to the radio communication system RCS2 shown in Figure 3, when a request REQ1a from the application service has been received at the network node NN, the network node NN forwards the request REQ1a to the corresponding paging module PM of the base station BS. The request REQ1 may contain the identifier *MD-ID* for the machine device MD and one or several the identifiers *DATA-ID* for the data to be measured and to be provided by the machine device MD. The base station BS which also is an endpoint of the second radio link RL2 determines the information/parameters for setting up the second radio link RL2 such as an identifier *MD-ID-IMT* which shall be applied for addressing the machine device MD on the second radio link RL2 and an access preamble RAP2 to be applied when accessing the second radio link RL2 a first time. Then, the paging module PM transmits a paging message PAGM via the first radio link RL1 to the machine device MD. The paging message PAGM contains the identifier *MD-ID-IMT.* When the machine device MD is able to measure different kind of data, the paging message PAGM may further contain the at least one identifier *DATA-ID* for the data to be measured and to be reported. The paging message PAGM may further contain information RAP2-INFO about the access preamble RAP2 and the information RAW-INFO about the configuration of the access time window which shall be applied by the machine device MD when accessing the second radio link RL2 the first time. In a similar way as described above with respect to Figure 1 and Figure 2, the base station BS and the machine device MD may each have stored mapping tables with mappings between indices and access preambles.

When the machine device MD receives the paging message PAGM, the machine device MD uses the paging message PAGM as a trigger to activate and switch the transceiver for the second radio link RL2 from the sleep mode to a ready-to-operate mode. The transceiver of the machine device MD further synchronizes with the second radio link RL2. When the transceiver is synchronized for example to a downlink channel of the second radio link RL2, the machine device MD transmits the access preamble RAP2 to the base station BS. Similar to the embodiment shown with respect to Figure 2, the access preamble RAP2 may be transmitted using a contention-based random access time frame. In an alternative embodiment, when the paging message PAGM contains the information RAW-INFO, the machine device MD may transmit the access preamble RAP2 preferably during the indicated access time window in a contention-free way. In a further alternative embodiment, periodically appearing access time windows of the second radio link RL2 may be grouped into a first group of contention-based time windows for usual random access and into a second group of contention-free time windows for executing access to the second radio link RL2 by access preambles which have been determined and indicated to machine devices previously. Using the further alternative embodiment, the machine device MD may transmit the access preamble RAP2 via the second radio link RL2 during a contention-free time window.

When the base station BS has received the access preamble RAP2, the base station BS verifies whether the access preamble RAP2 is identical to the access preamble RAP2 which has been indicated to the machine device MD and thereby identifies the machine device MD as a correct receiver of the paging message PAGM. When both access preambles RAP2 are identical, the base station BS transmits via the second radio link RL2 to the machine device MD information TA2 about a timing advance to be applied when transmitting uplink data via the second radio link RL2. When the machine device MD has received the information TA2 about the timing advance, the machine device MD applies the timing advance to transmit uplink data UL-DATA via the second radio link RL2 to the base station BS preferably while maintaining the first radio link RL1 in the CONNECTED state or the IDLE state as described above with respect to the embodiment shown in Figure 1 and Figure 2. The base station BS forwards the uplink data UL-DATA for example to the central paging module PS which includes the uplink data UP-DATA in a response message RES as a response to the request REQ1.

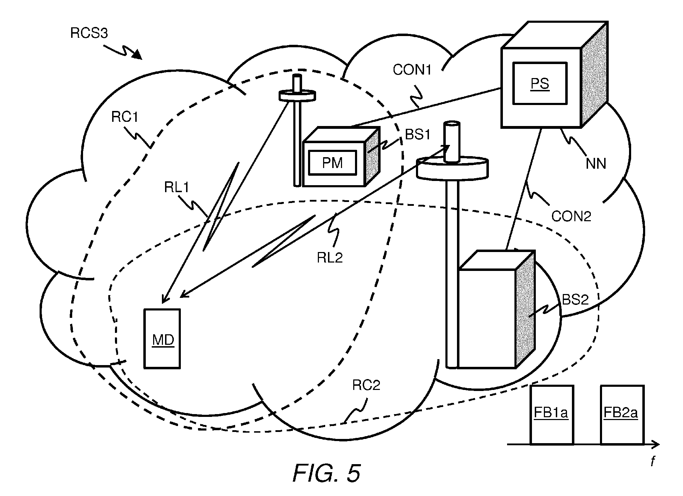

Figure 5 shows schematically an even further radio communication system RCS3 which is configured to control access of the machine device MD to the radio communication system RCS3 according to a second exemplary embodiment. The radio communication system RCS3 may apply one of the radio access technologies as mentioned above for the radio communication system RCS1 which is shown in Figure 1.

In the following only the differences between the radio communication system RCS3 and the radio communication system RCS2 of Figure 3 are described. The radio communication system RCS3 contains the network node NN, a first base station BS1 which provides wireless coverage for a first radio cell RC1 and applies the first radio link RL1 and further contains a second base station BS2 which provides wireless coverage for a second radio cell RC2 and applies the second radio link RL2. Further base stations are not shown for simplification.

The first radio link RL1 may use a frequency band FB1a and the second radio link RL2 may use a further frequency band FB2a which may be separated from the frequency band FB1a as indicated by an inset in the lower right part of Figure 4.

The network node NN is connected to the first base station BS1 via a first connection CON1 and the network node NN is further connected to the second base station BS2 via a second connection CON2. The first base station BS1 contains the paging module PM.

When the application service requests the measurement data from the machine device MD, the central paging module PS may request the information for setting up the second radio link RL2 from the second base station BS2. When the central paging module PS receives the information for setting up the second radio link RL2, the central paging module PS transmits the request to the paging module PM to provide measurement from the machine device MD. A further basic processing at the network nodes of the radio communication system RCS3 may be the same as described with respect to the processing of the network nodes of the radio communication system RCS2.

More information about the interworking between the network nodes shown in Figure 5 and about the internal processing of the network nodes shown in Figure 5 is given in the following description with respect to the Figures 6 to 8.

Figure 6 shows schematically a message flow diagram MF3 of an overall method for controlling access of the machine device MD to the radio communication system RCS2, RCS3 via the second radio link RL2 preferably while maintaining the first radio link RL1 between the machine device MD and the radio communication system RCS2, RCS3 according to the second exemplary embodiment. In the following only the differences between the flow diagram MF3 and the flow diagram MF2 of Figure 4 are described.

With respect to the radio communication system RCS3 shown in Figure 5, when the request REQ1a from the application service has been received at the network node NN, the network node NN transmits a request REQ2a to the second base station BS2 for providing the information/parameters for setting up the second radio link RL2. The request REQ2a may contain the identifier *MD-ID* for the machine device MS and the at least one identifier *DATA-ID* for the data to be measured and to be provided by the machine device MD. When the second base station BS2 receives the request REQ2a, the second base station BS2 determines the information/parameters for setting up the second radio link RL2. Then, the second base station BS2 transmits a response ANS to the central paging module PS of the network node NN. The response ANS contains the information/parameters *MD-ID-IMT, RAP2-INFO, RAW-INFO* for setting up the second radio link RL2. When the central paging module PS receives the response ANS, the network node NN transmits a request REQ3a to the paging module PM. The request REQ3a may contain the identifier *MD-ID* for the machine device MS, the at least one identifier *DATA-ID* for the data to be measured and to be provided by the machine device MD and the information/parameters *MD-ID-IMT, RAP2-INFO, RAW-INFO* for setting up the second radio link RL2. When the paging module PM has received the request REQ3a, the paging module PM transmits the paging message PAGM via the first radio link RL1 to the machine device MD.

When the second base station BS2 has received the access preamble RAP2, the second base station BS2 verifies whether the access preamble RAP2 is identical to the access preamble RAP2 which has been indicated to the machine device MD previously and thereby identifies the machine device MD as the correct receiver of the paging message PAGM. When both access preambles RAP2 are identical, the second base station BS2 transmits via the second radio link RL2 to the machine device MD information TA2 about a timing advance to be applied when transmitting uplink data via the second radio link RL2. When the machine device MD has received the information TA2 about the timing advance, the machine device MD applies the timing advance to transmit uplink data UL-DATA via the second radio link R2L to the second base station BS2 preferably while maintaining the first radio link RL1 in the CONNECTED state or the IDLE state. The second base station BS2 forwards the uplink data UL-DATA for example to the central paging module PS which includes the uplink data UL-DATA in the response message RES.

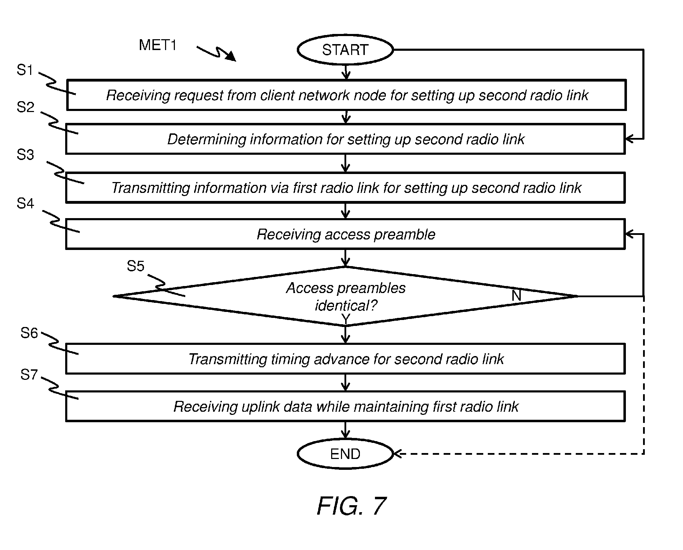

Figure 7 shows schematically a flow diagram of a network based method MET1 for controlling access of a client network node to the radio communication system RCS1, RCS2, RCS3 according to an exemplary embodiment. The client network node may be either the mobile station MS which is shown in Figure 1 or the machine device MD which is sketched in Figure 3 and Figure 5.

In a first optional step S1, the request REQ1 may be received from the mobile station MS.

By a further step S2, the information for setting up the second radio link MWW-RL, RL2 is determined. A trigger for this determination may be either the request REQ1 from the mobile station MS or a lack of radio resources of the first radio link IMT-RL for providing sufficient quality of service or the request REQ1a from the central paging module PS.

In a next step S3, the information for setting up the second radio link MMW-RL, RL2 is transmitted via the first radio link IMT-RL, RL2 to the client network node.

By a further step S4, the access preamble RAP1, RAP2 is received from the client network node.

In a next step S5, it may be verified whether the received access preamble and the access preamble which has been determined and indicated to the client network node previously are identical. When both access preambles are identical, step S6 may be a next step else the step S4 may be repeated for receiving a further access preamble or the network-based method may end (see dashed arrow).

Using the further step S6, the information TA1, TA2 about the timing advance is transmitted to the client network node.

In a further step S7, the uplink data UL-DATA are received from the client network node via the second radio link MMW-RL, RL2.

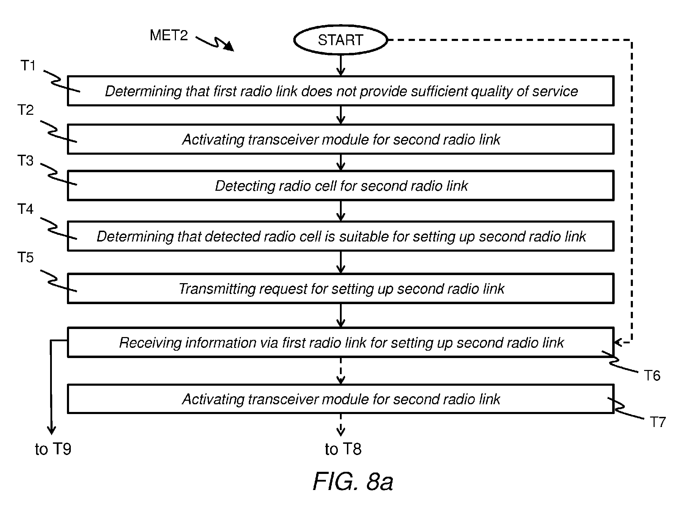

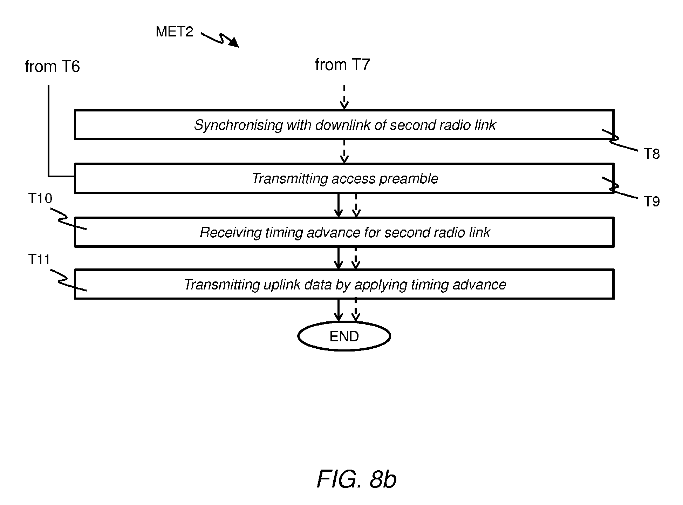

Figure 8a and Figure 8b show schematically a flow diagram of a client based method MET2 for controlling access of the client network node to the radio communication system RCS1, RCS2, RCS3 according to an exemplary embodiment. The client network node may be either the mobile station MS which is shown in Figure 1 or the machine device MD which is sketched in Figure 3 and Figure 5.

The steps T1 to T6 and T9 to T11 of the client based method MET2 which follow the continuous arrows may be executed by the mobile station MS according to the flow diagram MF1 which is shown in Figure 2. The steps T6 to T11 of the client based method MET2 which follow the dashed arrows may be executed by the machine device MD according to the flow diagrams MF2, MF3 which are shown in Figure 4 and Figure 6.

In a first step T1, the client network node may determine for example that the quality of service which can be provided by the first radio link IMT-RL is not sufficient for a service currently running at the client network node or for a service currently requested at the client network node. This means, that the maximum data rate of the first radio link IMT-RL may be too small or the time delay via the first radio link IMT-RL is too large.

In a further step T2, the client network node activates the transceiver which shall be applied for the second radio link MMW-RL.

By a next step T3, the client network node detects for example the second radio cell MMW-RC2 of the second supporting base station MMW-BS2 which may be applied for providing a network-based endpoint of the second radio link MMW-RL.

In a further step T4, the client network node may determine for example based on pilot measurements of the second radio cell MMW-RC2 that the second radio cell MMW-RC2 is suitable for providing the required quality of service via the second radio link MMW-RL2.

As a next step T5, the client network node transmits via the first radio link IMT-RL the request REQ1 for setting up the second radio link MMW-RL2 to the radio communication system RCS1.

By a further step T6 or as an initial step with respect to the embodiments shown in Figure 3 to Figure 6, the client network node receives from the radio communication system RCS1, RCS2, RCS3 the information for setting up the second radio link MWW-RL, RL2. The information for setting up the second radio link MMW-RL, RL2 may be for example part of the radio resource grant GRT1 (see Figure 2) or part of the paging message PAGM (see Figure 4 and Figure 6).

In a next step T7, the client network node activates the transceiver for the second radio link RL2 which is triggered by the reception of the information for setting up the second radio link RL2.

By a further step T8, the client network node synchronizes the transceiver for the second radio link RL2 for example with a corresponding LTE downlink channel of the second radio link RL2 by using so-called pilot signals.

Using the step T9, the client network node transmits the access preamble RAP1, RAP2 to the radio communication system RCS1, RCS2, RCS3.

In a next step T10, the client network node receives the information TA1, TA2 about the timing advance which shall be applied by the client network node when accessing the second radio link MMW-RL, RL2.

In a further step T11, the client network node transmits the uplink data UL-DATA to the radio communication system RCS1, RCS2, RCS3 via the second radio link MMW-RL, RL2.

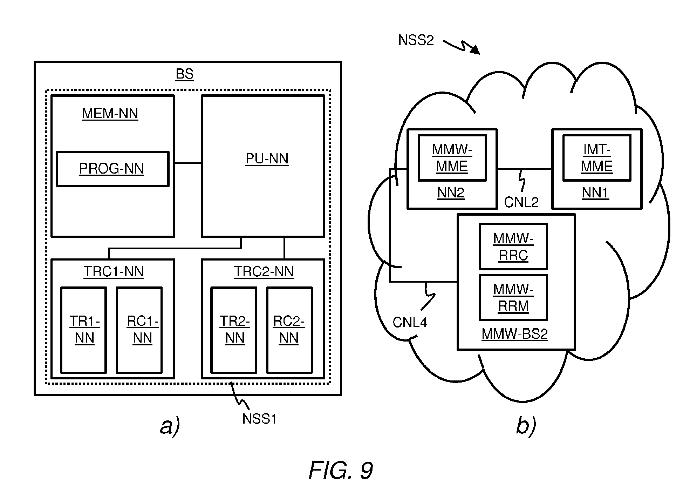

Figure 9a and Figure 9b show schematically two block diagrams of a network subsystem NSS1 and a further network subsystem NSS2 which are both being configured to control access of the client network node to the radio communication system RCS1, RCS2, RCS3 according to two exemplary embodiments.

According to Figure 9a, the network subsystem NNS1 may be implemented in a single network node of the radio communication system RCS2 such as implemented in the base station BS.

The network subsystem NNS1 contains a first transceiver module TRC1-NN which may be connected to an antenna system for providing the first radio link RL1 and the second radio link RL2 to the mobile device MD. The first transceiver module TRC1-NN may contain a transmitter sub-module TR1-NN which is configured to transmit messages according to the flow diagram MF2 to the machine device MD and a receiver sub-module RC1-NN which is configured to receive further messages according to the flow diagram MF2 from the machine device MD.

The network subsystem NNS1 further contains a second transceiver module TRC2-NN which may be configured to connect via the connection CON to the network node NN. The second transceiver module TRC2-NN may contain a transmitter sub-module TR2-NN which is configured to transmit messages according to the flow diagram MF2 to the network node NN and a receiver sub-module RC2-NN which is configured to receive further messages according to the flow diagram MF from the network node NN.

The transmitter modules TR1-NN, TR2-NN may contain typical transmitter components, such as filter or filter circuitry, an amplifier such as a Power Amplifier (PA), conversion circuitry for converting a base band signal to a transmission signal, a digital/analogue converter, or signal processing capability such as DSP (DSP = Digital signal processor). The receiver modules RC1-NN, RC2-NN may correspond to one or more receiver devices, one or more receiver units, or any means for receiving. The receiver modules RC1-NN, RC2-NN may therefore comprise typical receiver components, such as filter or filter circuitry, an amplifier such as an LNA (LNA = Low Noise Amplifier), conversion circuitry for converting a received transmission signal to a base band signal, an analog/digital converter, or signal processing capability such as a DSP.

The network subsystem NNS1 even further contains a memory module MEM-NN. The memory module MEM-NN is configured to store a computer program PROG-NN for operating a processing module PU-NN by executing the method MET1. The memory module MEM-NN is further configured to store for example the access preamble RAP2.

The network subsystem NNS1 even further contains the processing module PU-NN. The processing module PU-NN is configured to operate the network subsystem NNS1 by executing the method MET1.

With respect to Figure 9b, the network subsystem NNS2 may be distributed across at least two network nodes of the radio communication system RCS1, RCS3. With respect to the radio communication system RCS1 which is shown in Figure 1 the network subsystem NNS2 may be distributed across the second supporting base station MMW-BS2, the IMT base station IMT-BS, the first network node NN1 and the second network node NN2. The second supporting base station MMW-BS2 may be configured for example to determine the information for setting up a second radio link MMW-RL2 and to transmit the information for setting up the second radio link MMW-RL2 via the IMT base station IMT-BS and via the first radio link IMT-RL to the mobile station MS.

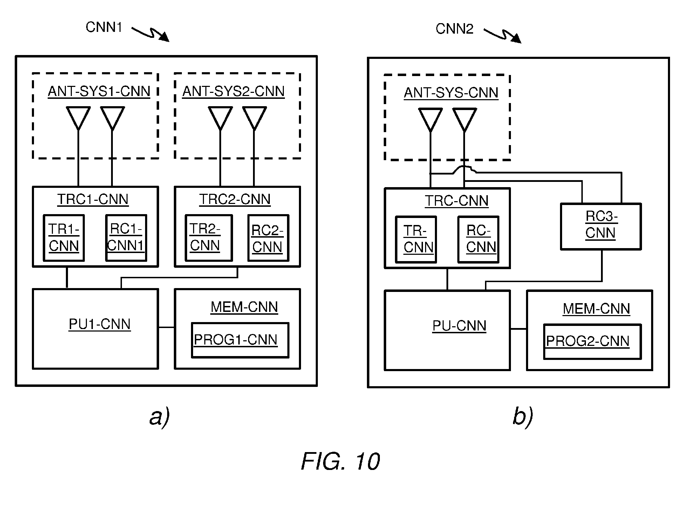

Figure 10a and Figure 10b show schematically two block diagrams of a client network node CNN1 and a further client network node CNN2 being configured access the radio communication system RCS1, RCS2, RCS3 via the second radio link MMW-RL, RL2 preferably while having access to the radio communication system RCS1, RCS2, RCS3 via the first radio link IMT-RL, RL1 according to two exemplary embodiments. The client network nodes CNN1, CNN2 may be either the mobile station MS shown in Figure 1 or the machine device shown in Figures 3 and 4.

According to Figure 10a, the client network node CNN1 contains a first transceiver module TRC1-CNN which is configured to connect via the first radio link IMT-RL, RL1 to the radio communication system RCS1, RCS2, RCS3. The first transceiver module TRC1-CNN may contain a transmitter sub-module TR1-CNN which is configured to transmit messages to the radio communication system RCS1, RCS2, RCS3 according to the flow diagrams MF1, MF2 and a receiver sub-module RC1-CNN which is configured to receive further messages from the radio communication system RCS1, RCS2, RCS3 according to the flow diagrams MF1, MF2.

The client network node CNN1 further contains a second transceiver module TRC2-CNN which is configured to connect via the second radio link MMW-RL, RL2 to the radio communication system RCS1, RCS2, RCS3. The second transceiver module TRC2-CNN may contain a transmitter sub-module TR2-CNN which is configured to transmit messages to the radio communication system RCS1, RCS2, RCS3 according to the flow diagrams MF1, MF2 and a receiver sub-module RC2-CNN which is configured to receive further messages from the radio communication system RCS1, RCS2, RCS3 according to the flow diagrams MF1, MF2.

The transmitter modules TR1-CNN, TR2-CNN may contain typical transmitter components, such as filter or filter circuitry, an amplifier such as a Power Amplifier (PA), conversion circuitry for converting a base band signal to an RF signal (RF = Radio Frequency), a digital/analogue converter, or signal processing capability such as DSP (DSP = Digital signal processor). The receiver modules RC1-CNN, RC2-CNN may correspond to one or more receiver devices, one or more receiver units, or any means for receiving. The receiver modules RC1-CNN, RC2-CNN may therefore comprise typical receiver components, such as filter or filter circuitry, an amplifier such as an LNA (LNA = Low Noise Amplifier), conversion circuitry for converting a received RF signal to a base band signal, an analog/digital converter, or signal processing capability such as a DSP.

The client network node CNN1 even further contains a first antenna system ANT-SYS1-CNN which is connected to the first transceiver module TRC1-CNN and even further contains a second antenna system ANT-SYS2-CNN which is connected to the second transceiver module TRC2-CNN. Both antenna systems ANT-SYS1-CNN, ANT-SYS2-CNN may contain two or more antenna elements as shown in Figure 10a for being able to operate the transceiver modules TRC1-CNN, TRC2-CNN with one or several multi-antenna transmission modes such as defined e.g. in 3GPP. In a further alternative, one of the antenna systems ANT-SYS1-CNN, ANT-SYS2-CNN may contain a single antenna element and a further one of the antenna systems ANT-SYS1-CNN, ANT-SYS2-CNN may contain two or more antenna elements. In an even further alternative, both antenna systems ANT-SYS1-CNN, ANT-SYS2-CNN may contain only a single antenna element.

The client network node CNN1 even further contains a memory module MEM-CNN. The memory module MEM-CNN is configured to store a computer program PROG1-CNN for operating a processing module PU-CNN by executing the steps of the method MET2. The memory module MEM-CNN is further configured to store for example the access preamble RAP1, RAP2 and the identifier MS-ID-MMW, MD-ID-IMT.

The client network node CNN1 even further contains the processing module PU-CNN. The processing module PU-CNN is configured to operate the client network node CNN1 by executing the steps of the method MET1.

With respect to Figure 10b, the client network node CNN2 contains in comparison to the client network node CNN1 a single transceiver module TRC-CNN which is configured to connect via the second radio link RL2 to the radio communication system RCS2, RCS3. The transceiver module TRC-CNN may contain a transmitter sub-module TR-CNN which is configured to transmit messages to the IMT base station IMT-BS or to the second supporting base station MMW-BS2 and a receiver sub-module RC-CNN which is configured to receive further messages from the IMT base station IMT-BS or from the second supporting base station MMW-BS2. The client network node CNN2 further contains a separate receiver module RC3-CNN which is configured to receive messages from the radio communication system RCS2, RCS3 via the first radio link RL1 according to the flow diagram MF2.

In comparison to the client network node CNN1, the client network node CNN2 may further contain a single antenna system ANT-SYS-CNN such as an ultra wideband planar monopole antenna which is designed to be used for cognitive radio applications and which is able to receive and to transmit messages via the first radio link RL1 and the second radio link RL2 even if both radio links RL1, RL2 are operated in different frequency ranges (see inset in Figure 5).

Further modules of the client network node CNN2 may be the similar to the further modules of the client network node CNN1 such as the memory module MET-CNN and the processing module PU-CNN. The memory module MEM-CNN is configured to store a computer program PROG2-CNN which is adapted to the single antenna system architecture of the client network node CNN2 and which is configured to operate the processing module PU-CNN by executing the steps of the method MET2.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the methods MET1, MET2 disclosed in the specification or in the claims may be implemented by a device having means for performing each of the respective steps of these methods. Preferably, a computer program product may contain computer-executable instructions for performing the methods MET1, MET2, when the computer program product is executed on a programmable hardware device such as a DSP, an ASIC or an FPGA. Preferably, a digital data storage device may encode a machine-executable program of instructions to perform the methods MET1, MET2.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A network-based method (MET1) for controlling access of a client network node (CNN1, CNN2, MS, MD) to a radio communication system (RCS1, RCS2, RCS3) comprising:
- determining (S2) information for setting up a second radio link (MWW-RL, RL2) between said client network node (CNN1, CNN2, MS, MD) and said radio communication system (RCS1, RCS2, RCS3) when said radio communication system (RCS1, RCS2, RCS3) has access to said client network node (CNN1, CNN2, MS, MD) via a first radio link (IMT-RL, RL1), and
- transmitting (S3) to said client network node (CNN1, CNN2, MS, MD) via said first radio link (IMT-RL, RL1) said information for setting up said second radio link (MMW-RL, RL2) between said client network node (CNN1, CNN2, MS, MD) and said radio communication system (RCS1, RCS2, RCS3).

2. The method (MET1) according to claim 1, wherein said information comprises an identifier (MS-ID-MMW, MD-ID-IMT) of said client network node (CNN1, CNN2, MS, MD) to be applied for addressing said client network node (CNN1, CNN2, MS, MD) on said second radio link (MWW-RL, RL2).

3. The method (MET1) according to any of the preceding claims, wherein said determining (S2) determines an access preamble (RAP1, RAP2) to be applied when said client network node (CNN1, CNN2, MS, MD) accesses said radio communication system (RCS1, RCS2, RCS3) via said second radio link (MWW-RL, RL2), wherein said information further comprises information (RAP1-INFO, RAP2-INFO) about said access preamble (RAP1, RAP2) and wherein said method (MET1) further comprises:
- receiving (S4) from said client network node (CNN1, CNN2, MS, MD) said access preamble (RAP1, RAP2) via said second radio link (MMW-RL, RL2) during an initial access of said client network node (CNN1, CNN2, MS, MD) to said radio communication system (RCS1, RCS2, RCS3) via said second radio link (RL2), and
- verifying (S5), whether said received access preamble (RAP1, RAP2) and said determined access preamble (RAP1, RAP2) are identical.

4. The method (MET1) according to any of the preceding claims, wherein said method (MET1) further comprises receiving (S1) a request (REQ) from said client network node (CNN1, CNN2, MS) via said first radio link (IMT-RL, RL1) for setting up said second radio link (MMW-RL, RL2).

5. The method (MET1) according to claim 4, wherein said request (REQ) comprises an identifier (CELL-ID) of a radio cell (MWW-RC2) to be applied for setting up said second radio link (MMW-RL, RL2).

6. A client-based method (MET2) for controlling access of a client network node (CNN1, CNN2, MS, MD) to a radio communication system (RCS1, RCS2, RCS3) comprising:
- receiving (T6) via a first radio link (IMT-RL, RL1) information for setting up a second radio link (MMW-RL, RL2) between said client network node (CNN1, CNN2, MS, MD) and said radio communication system (RCS1, RCS2, RCS3), when said radio communication system (RCS1, RCS2, RCS3) has access to said client network node (CNN1, CNN2, MS, MD) via said first radio link (IMT-RL, RL1), and
- configuring and operating (T7, T8) a transceiver (TRC2-CNN, TRC-CNN) of said client network node (CNN1, CNN2, MS, MD) for accessing said radio communication system (RCS1, RCS2, RCS3) via said second radio link (MMW-RL, RL2) based on said received information for setting up said second radio link (MMW-RL, RL2).

7. The method (MET2) according to claim 6, wherein said information for setting up said second radio link (MMW-RL, RL2) further comprises information (RAP1-INFO, RAP2-INFO) about an access preamble (RAP1, RAP2) to be applied when accessing said radio communication system (RCS1, RCS2, RCS3) via said second radio link (MMW-RL, RL2), and wherein said transceiver (TRC2-CNN, TRC-CNN) is only configured and operated for accessing said radio communication system (RCS1, RCS2, RCS3) via said second radio link (MMW-RL, RL2) when said information (RAP1-INFO, RAP2-INFO) about said access preamble (RAP1, RAP2) is received via said first radio link (IMT-RL, RL1).

8. The method (MET2) according to claim 7, wherein said information for setting up said second radio link (MMW-RL, RL2) further comprises information (RAW-INFO) about an access time range to be used for transmitting said access preamble (RAP1, RAP2) from said client network node (CNN1, CNN2, MS, MD), and wherein said method (MET2) comprises transmitting (T9) said access preamble (RAP1, RAP2) via said second radio link (MMW-RL, RL2) during said access time range.

9. The method (MET2) according to claim 8, wherein said access time range is an access time range being predefined for contention-free random access.

10. The method (MET2) according any of the preceding claims 6 to 9, wherein said method (MET2) further comprises:
- detecting (T3) a radio cell (MMW-RC2, RC2) being capable to provide said second radio link (MMW-RL, RL2),
- determining (T4) that said second radio link (MMW-RL, RL2) may provide a better quality of service than said first radio link (IMT-RL, RL1), and
- transmitting (T5) a request (REQ) via said first radio link (IMT-RL, RL1) for setting up said second radio link (MMW-RL, RL2).

11. A computer program having a program code for performing a method (MET1, MET2) according to any of the preceding claims, when the computer program is executed on a computer, a processor, or a programmable hardware component.

12. A network sub-system (NSS1, NSS2) for controlling access of a client network node (CNN1, CNN2, MS, MD) to a radio communication system (RCS1, RCS2, RCS3) comprising:
- a processing module (PU-NN, MMW-MME) configured to determine information for setting up a second radio link (MMW-RL, RL2) between said client network node (CNN1, CNN2, MS, MD) and said radio communication system (RCS1, RCS2, RCS3) when said radio communication system (RCS1, RCS2, RCS3) has access to said client network node (CNN1, CNN2, MS, MD) via a first radio link (IMT-RL, RL1), and
- a transmitter module (TR1-NN, MMW-BS2) configured to transmit to said client network node (CNN1, CNN2, MS, MD) via said first radio link (IMT-RL, RL1) said information for setting up said second radio link (MMW-RL, RL2) between said client network node (CNN1, CNN2, MS, MD) and said radio communication system (RCS1, RCS2, RCS3).

13. The network sub-system (NSS1, NSS2) according to claim 12, wherein said network sub-system (NSS1) is located in a single network node of said radio communication system (RCS2) or said processing module (MMW-MME) and said transmitter module (MMW-BS2) of said network sub-system (NSS2) are distributed across at least two network nodes (NN1, MMW-BS2) of said radio communication system (RCS1).

14. A client network node (CNN1, CNN2, MS, MD) for controlling access of said client network node (CNN1, CNN2, MS, MD) to a radio communication system (RCS1, RCS2, RCS3) comprising:
- a receiver module (RC1-CNN1, RC3-CNN) configured to receive via a first radio link (IMT-RL, RL1) information for setting up a second radio link (MMW-RL, RL2) between said client network node (CNN1, CNN2, MS, MD) and said radio communication system (RCS1, RCS2, RCS3), when said radio communication system (RCS1, RCS2, RCS3) has access to said client network node (CNN1, CNN2, MS, MD) via said first radio link (IMT-RL, RL1), and
- a processing module (PU1-CNN, PU2-CNN) adapted to configure and to operate a transceiver (TRC2-CNN, TRC-CNN) of said client network node (CNN1, CNN2, MS, MD) for accessing said radio communication system (RCS1, RCS2, RCS3) via said second radio link (MMW-RL, RL2) based on said received information for setting up said second radio link (MMW-RL, RL2).

15. Client network node (CNN1, CNN2, MS, MD) according to claim 14, wherein said client network node (CNN1, CNN2, MS, MD) is a mobile station (MS) or a machine device (MD).
